# EUROPÄISCHE PATENTANMELDUNG

(11) **EP 2 305 964 A1**
(43) Veröffentlichungstag der Anmeldung: **06.04.2011**
(21) Anmeldenummer: 09171049.1
(22) Anmeldetag: 23.09.2009
(51) Int. Cl.: F01K 17/00, F01K 17/06

(54) **Dampfkraftwerk**

(71) Anmelder: SIEMENS AKTIENGESELLSCHAFT, 80333 München (DE)
(72) Erfinder: Haberberger, Georg, 91088 Bubenreuth (DE); Wechsung, Michael, 45470 Mülheim an der Ruhr (DE); Graeber, Carsten, 91056 Erlangen (DE)

(57) **Zusammenfassung**

Die Erfindung betrifft ein Dampfkraftwerk (1, 61, 71, 81), umfassend eine Anzahl von Teilturbinen (13, 17, 19, 20, 25), die jeweils von Dampf durchströmbar sind, eine Überströmleitung (14, 21, 73), die zwischen einer ersten Teilturbine (13, 17, 19, 20, 25) und einer zweiten Teilturbine (13, 17, 19, 20, 25) angeordnet ist, und einen Zwischenüberhitzer (15, 75) in der Überströmleitung (14, 21, 73). Hierbei ist der ersten Teilturbine (13, 17, 19, 20, 25) nach der Expansionsstufe strömungstechnisch vor dem Zwischenüberhitzer (9, 15, 75) eine Anzapfleitung (41) zur Dampfentnahme angeschlossen. Weiterhin ist eine Expansionsvorrichtung (43) vorgesehen, in die die Anzapfleitung (41) mündet, und ein Verbraucher (50), der über eine Prozessdampfleitung (47) der Expansionsvorrichtung (43) angeschlossen ist.

## Beschreibung

Die Erfindung betrifft ein Dampfkraftwerk, umfassend eine Anzahl von Teilturbinen, die jeweils von Dampf durchströmbar sind, eine Überströmleitung, die zwischen einer ersten Teilturbine und einer zweiten Teilturbine angeordnet ist, und einen Zwischenüberhitzer in der Überströmleitung.

Ein Dampfkraftwerk der eingangs genannten Art ist beispielsweise der EP 1 744 032 A1 zu entnehmen. Das Dampfkraftwerk, hier als kombiniertes Gas- und Dampfkraftwerk (GUD) ausgebildet, umfasst eine Anzahl von Teilturbinen, die für verschiedene Drücke ausgelegt sind und von Dampf durchströmt werden. Der Dampf wird beispielsweise nach dem Austritt aus einer als Hochdruckturbine ausgebildeten Teilturbine über eine Überströmleitung in einen Zwischenüberhitzer geleitet. Eine weitere Überströmleitung ist zwischen einer Mittel- und einer Niederdruckturbine angeordnet. Diese Überströmleitung ist mit einem Ventil zur Entnahme von Heiz- oder Prozessdampf ausgestattet. Der Prozessdampf wird über eine Dampfleitung einer technischen Anlage oder einem Industriebetrieb zugeführt.

Besonders bei Dampfkraftwerken mit sehr hohen Wirkungsgradanforderungen wird nach geeigneten Möglichkeiten gesucht, große Dampfmengen geeignet auszukoppeln. Große Dampfmengen benötigt man beispielsweise zur Fernwärmeauskopplung, zur Brennstoffaufbereitung, wie insbesondere einer Braunkohlentrocknung, oder zur Rauchgaswäsche, wie insbesondere einer CO₂-Abscheidung. Diese Verbraucher benötigen neben den großen Dampfmengen, die bis zur Hälfte der in einem konventionellen Dampfkraftwerk einer Niederdruckteilturbine zugeleiteten Dampfmenge betragen kann, den Dampf zudem auf einem relativ niedrigen Temperaturniveau von 100 °C bis 150 °C in der Nähe der Kondensationstemperatur.

Entsprechend der EP 1 744 032 A1 erfolgt eine Dampfentnahme aus einer Überströmleitung zwischen zwei Teilturbinen, insbesondere zwischen einer Mitteldruck- und einer Niederdruckdampfturbine. Hier große Dampfmengen abzunehmen würde jedoch den Wirkungsgrad des Dampfkraftwerkes in unerwünschter Weise stark verringern.

Es ist Aufgabe der Erfindung, für ein Dampfkraftwerk eine Dampfbereitstellung für einen spezifischen Verbraucher mit hohem Dampfbedarf anzugeben, wobei bei möglichst niedrigen Kosten der Gesamtwirkungsgrad möglichst hoch bleibt.

Diese Aufgabe der Erfindung wird erfindungsgemäß gelöst durch ein Dampfkraftwerk mit der Merkmalskombination gemäß Anspruch 1.

Demnach umfasst das Dampfkraftwerk eine Anzahl von Teilturbinen, die jeweils von Dampf durchströmbar sind, eine Überströmleitung, die zwischen einer ersten Teilturbine und einer zweiten Teilturbine angeordnet ist, und einen Zwischenüberhitzer in der Überströmleitung. Hierbei ist der ersten Teilturbine nach der Expansionsstufe strömungstechnisch vor dem Zwischenüberhitzer eine Anzapfleitung zur Dampfentnahme angeschlossen. Es ist eine Expansionsvorrichtung vorgesehen, in die die Anzapfleitung mündet, und ein Verbraucher, der über eine Prozessdampfleitung der Expansionsvorrichtung angeschlossen ist.

In einem ersten Schritt geht die Erfindung von der Tatsache aus, dass bislang üblicherweise eine Dampfmenge aus Überströmleitungen nach einem Zwischenüberhitzer entnommen wird. Ein überhitzter Dampf liefert jedoch für die angesprochenen Verbraucher, wie insbesondere für einen Rauchgaswäscher oder für eine Brennstoffaufbereitung, höhere Temperaturen als benötigt und somit einen Exergieüberschuss. Der Überschuss an Exergie geht somit ungenutzt verloren, wodurch der Wirkungsgrad des Dampfkraftwerks verringert wird.

Dieses Problem löst die Erfindung dadurch, dass der Dampf vor dem Zwischenüberhitzer über eine Anzapfleitung ausgekoppelt wird. Ein derartiger Dampf weist ein nutzbares Temperaturniveau für angeschlossene Verbraucher auf. Da der ausgekoppelte Dampf das Dampfkraftwerk ohne unnötige Exergieverluste verlässt, kann der Gesamtwirkungsgrad des Dampfkraftwerkes gegenüber der bislang bekannten Lösung höher gehalten werden. Mit anderen Worten sieht die Erfindung vor, den Dampf vor oder aus der sogenannten kalten Zwischenüberhitzerleitung, der Zuleitung zu dem Zwischenüberhitzer, abzuziehen. Dabei soll die Erfindung auch solche Ausgestaltungen umfassen, bei denen der benötigte Dampf im Wesentlichen bzw. überwiegend aus der Überströmleitung vor dem Zwischenüberhitzer abgezogen wird, und wobei ein weiterer, geringerer Dampfanteil beispielsweise aus der Überströmleitung nach dem Zwischenüberhitzer hinzugeführt wird. Dies kann für einen spezifischen Verbraucher unter Betrachtung des Gesamtsystems insgesamt kostengünstiger sein oder im Einzelfall zu einem höheren Gesamtwirkungsgrad führen.

In einem weiteren Schritt sieht die Erfindung eine Expansionsvorrichtung vor, durch die der ausgekoppelte Dampf vor der Weiterleitung an einen Verbraucher auf ein entsprechendes Druckniveau expandiert wird. Durch die Expansion verringert sich auch die Temperatur des Dampfes und es können gezielt die für einen Verbraucher benötigten Bedingungen eingestellt werden. Der Dampf kann insbesondere unter Verrichtung von Arbeit exakt auf das durch den Verbraucher nutzbare Niveau eingestellt werden. Eine Expansionsvorrichtung bietet somit den weiteren Vorteil, durch die Expansion des Dampfes unter Verrichtung von Arbeit für das Gesamtsystem den Gesamtwirkungsgrad des Dampfkraftwerkes zu verbessern.

Ein Dampfkraftwerk ist die vorherrschende Bauart eines Kraftwerkes zur konventionellen Erzeugung elektrischer Energie aus fossilen Brennstoffen, bei der die thermische Energie von Wasserdampf in einer Dampfturbine ausgenutzt wird. Zum Betrieb einer Dampfturbine wird Wasserdampf in einem Dampfkessel erhitzt und in die Dampfturbine eingeleitet. Dort wird der Dampf expandiert. Die bei der Expansion frei werdende Arbeit wird beispielsweise an einem an die Turbine gekoppelten Generator geleistet. Der Dampfkessel wird mit konventionellen Brennstoffen, wie beispielsweise Erdgas oder Kohle befeuert. Im Falle eines kombinierten GUD-Kraftwerkes wird das Abgas der Gasturbine zur Dampfbereitung einem Abhitzedampfkessel zugeleitet. Durch die Ausnutzung der im Abgasstrom der Gasturbine enthaltenen Restwärme lässt sich bei einer derart kombinierten Gas- und Dampfturbinenanlage ein besonders hoher Gesamtwirkungsgrad erzielen und somit auch Brennstoff einsparen. Dies ist im Hinblick auf die Belange des Umweltschutzes von großem Interesse.

Ein Dampfkraftwerk umfasst in der Regel mehrere Teilturbinen, die jeweils für unterschiedliche Drücke ausgelegt sind. Hierbei sind beispielsweise hintereinander geschaltete Hochdruck (HD)-, Mitteldruck (MD)- und Niederdruck (ND)- Teilturbinen üblich. Es ist ebenso möglich, dass eine Dampfturbine mehrere Teilturbinen aufweist, die für die gleichen Drücke ausgelegt sind.

Innerhalb einer Dampfturbine wird der Dampf von einer Teilturbine mit hohem Druck (zum Beispiel einer HD-Teilturbine) in Richtung einer Teilturbine mit dem niedrigsten Druck (zum Beispiel einer ND-Teilturbine) expandiert. Die Anzahl der Expansionsstufen, also die Anzahl der hintereinandergeschalteten Teilturbinen, kann hierbei je nach Anwendung und nach angeschlossenem Verbraucher unterschiedlich sein. Die einzelnen Teilturbinen können ein- oder mehrflutig ausgestaltet sein.

Das hier angegebene Dampfkraftwerk umfasst eine Überströmleitung mit einem Zwischenüberhitzer, die zwischen einer ersten Teilturbine und einer zweiten Teilturbine angeordnet ist. Über eine solche Überströmleitung wird beispielsweise der in einer Hochdruckteilturbine expandierte Dampf in eine Mitteldruckteilturbine geführt, um dort weiter entspannt zu werden. Der Zwischenüberhitzer überhitzt hierbei den aus der ersten Teilturbine austretenden und zuvor entspannten Dampf erneut. Der überhitzte Dampf wird schließlich in die zweite Teilturbine mit einem niedrigeren Druckniveau geleitet. Dort wird der Dampf erneut expandiert. Es ist möglich, mehrere Zwischenüberhitzer in einem Dampfkraftwerk vorzusehen. In Abhängigkeit der Anzahl von Teilturbinen kann ein Dampfkraftwerk mit einem oder mehreren Zwischenüberhitzern ausgestaltet sein.

Die Anzapfleitung ist der ersten Teilturbine nach der Expansionsstufe, und zwar strömungstechnisch vor dem Zwischenüberhitzer angeschlossen. Mittels der Anzapfleitung kann Prozessdampf aus dem Turbinensystem entnommen werden. Die Anzapfleitung kann grundsätzlich direkt an der Turbine angeschlossen oder der Zuleitung zum Zwischenüberhitzer abgezweigt sein.

Die Expansionsvorrichtung ist ausgangsseitig über eine Prozessdampfleitung an den Verbraucher angeschlossen. Der in der Expansionsvorrichtung expandierte und somit auf das benötigte Niveau eingestellte Prozessdampf wird über die Prozessdampfleitung unmittelbar an den Verbraucher geleitet. Die Expansionsvorrichtung ist bevorzugt ausgelegt, die im Wesentlichen gesamte benötigte Dampfmenge an den Verbraucher zu liefern.

Entsprechend den vorgenannten spezifischen Verbrauchern, die enorm große Dampfmengen auf einem relativ niedrigen Temperaturniveau benötigen, ist die Expansionsvorrichtung insbesondere dafür ausgelegt, große Dampfmengen vom gelieferten Druckniveau aus der kalten Zwischenüberhitzerleitung auf Drücke zwischen etwa 1,5 und 5 bar bei einem Temperaturniveau zwischen etwa 100 °C und 150°C zu entspannen. Beispielsweise benötigt eine Rauchgaswäsche, insbesondere zur CO₂-Abscheidung, bei einem solchen Temperaturniveau einen Druck von etwa 2 bar. Eine Brennstoffaufbereitung, insbesondere eine Braunkohletrocknung benötigt Drücke zwischen 3 bar und 5 bar.

Bei der Ausgestaltung des Verbrauchers als eine Rauchgaswäscher wird Abgas, auch als Rauchgas bezeichnet, beispielsweise aus der Befeuerungsanlage des Dampfkessels durch ein entsprechendes Fluid geleitet, wobei eine abzuscheidende Gaskomponente in Lösung geht. Das restliche Gas wird durch den Rauchgaswäscher in die Abluft geleitet. Die in Lösung befindliche Gaskomponente wird thermisch aus dem Fluid getrieben und beispielsweise einer Speicherstätte oder dergleichen zugleitet oder anderweitig dauerhaft eingebunden. Zur thermischen Entfernung der gelösten Gaskomponente wird der Prozessdampf benötigt. Insbesondere ist der Rauchgaswäscher zur Abscheidung von CO₂ aus dem Rauchgas ausgelegt. Das abgeschiedene CO₂ wird einer Einlagerung um Beispiel in unterirdischen Speicherstätten zugeführt.

Zur Abscheidung von CO₂ und weiteren sauren Gaskomponenten aus dem Rauchgas wird beispielsweise eine sogenannte Aminwäsche herangezogen, wobei das Rauchgas durch eine wässrige Amin-Lösung geleitet wird. Dabei gehen die sauren Komponenten, insbesondere CO₂, in Lösung. Die restlichen Komponenten werden in die Abluft geleitet. Im Anschluss wird die Lösung mit Hilfe des Prozessdampfes auf 100 °C bis 150° erhitzt, wodurch das CO₂ wieder aus der Lösung hinaustritt. Die restlichen Gase verbleiben gegebenenfalls in der Lösung. Das CO₂ kann im Anschluss komprimiert und dann beispielsweise in Speicherstätten im Boden gepumpt werden.

Der Rauchgaswäscher ist insbesondere ausgelegt, die benötigte Wärme zur Austreibung des CO₂ aus dem zugeführten Prozessdampf zu entnehmen, der diese gegebenenfalls unter Kondensation abgibt. Das Dampfkondensat wird zurück in den Dampfkreislauf geführt.

Der hohe Aufwand zur Abscheidung von CO₂ aus den Abgasen eines Kraftwerkes, insbesondere eines Dampfkraftwerkes, wobei große Dampfmengen unter Verringerung des Wirkungsgrades abgezogen werden, ist unter Betrachtung umweltrelevanter Gesamteffekte notwendig. Ein derart ausgerüstetes Dampfkraftwerk erfüllt gegenüber konventionellen Anlagen die diesbezüglich vorgeschriebenen strenger werdenden Emissionsauflagen.

Bei der Ausgestaltung des Verbrauchers als ein Rauchgaswäscher umfasst das Dampfkraftwerk eine Abgasleitung, die in den Verbraucher mündet. Durch eine derartige Abgasleitung wird dem Verbraucher das Rauchgas beispielsweise unmittelbar aus der Befeuerung des Dampfkessels oder als Abgas einer Gasturbine aus einem Abhitzedampfkessel zugeführt.

In einer anderen Ausgestaltung ist der Verbraucher großer Dampfmengen als eine Brennstoffaufbereitung ausgeführt. Dabei wird beispielsweise die Wärme des Prozessdampfes zur Restentfeuchtung von Braunkohle herangezogen.

Die Expansionsvorrichtung kann insbesondere separat zu den Teilturbinen ausgebildet sein. In diesem Fall besteht die Möglichkeit, eine bestehende Dampfturbine bzw. ein Dampfkraftwerk nachzurüsten. Vorteilhafterweise ist die Expansionsvorrichtung jedoch ein integrierter Bestandteil des Turbinensatzes des Dampfkraftwerkes. Insbesondere bietet sich diese Lösung bei einer Neukonzeptionierung eines Dampfkraftwerks an, da insgesamt weniger Raum benötigt wird, und eine solche Anordnung gegebenenfalls positiv zum Gesamtwirkungsgrad beitragen kann. Aber auch eine separate Lösung bietet den großen Vorteil, dass die der Dampfanzapfung nachfolgenden Anlagenteile kostengünstiger ausgelegt werden können. Da für die genannten Verbraucher ein bedeutender Dampfanteil abgezogen wird, können der Anzapfstelle nachfolgende Rohrleitungen, insbesondere für eine Überströmleitung zwischen einer Mitteldruck- und einer Niederdruckteilturbine, mit geringerem Querschnitt als konventionell ausgelegt werden, wodurch beträchtliche Kostenvorteile entstehen. Ebenso können der Anzapfstelle nachfolgende Heizflächen kleiner ausgelegt werden als bei konventioneller Bauart, was wiederum mit Kostenvorteilen verbunden ist.

Bevorzugt ist die Expansionsvorrichtung als eine Expansionsturbine ausgebildet. Durch eine derartige Ausbildung wird es leicht möglich, noch vorhandenen Exergieüberschuss zur Leistung von Arbeit für das Gesamtsystems zu nutzen. Über die Expansion des abgezogenen Dampfes wird insbesondere eine Welle angetrieben, die mit einem Generator verbunden sein kann.

Die Expansionsturbine wird bevorzugt im Gegendruckbetrieb eingesetzt. Das Expansionsende nach der Expansionsturbine entspricht dann dem benötigten Prozessdampfdruck. Somit können idealerweise das benötigte Druck- und Temperaturniveau für den Verbraucher geliefert werden.

Ist die Expansionsturbine in einer vorteilhaften Ausgestaltung nicht als eine separate Turbine ausgeführt, sondern auf einer gemeinsamen Welle mit den Teilturbinen angeordnet, so wird die gewonnene Arbeit unmittelbar am Gesamtsystem geleistet.

Die Ausgestaltung der Expansionsvorrichtung als eine Expansionsturbine bietet weiter den großen Vorteil, dass das Druckniveau für den Verbraucher ideal durch Regelung der Turbine für den Verbraucher eingestellt werden kann, und zwar in weiten Grenzen unabhängig vom Druckniveau des einströmenden Dampfes. Insbesondere können auch leicht Druckschwankungen des einströmenden Dampfes durch entsprechende Regelung der Turbine ausgeglichen werden.

Zweckmäßigerweise weist die Expansionsturbine weitere Anzapfungen auf. Beispielsweise kann hierdurch ein oder mehrere regenerative(r) Speisewasservorwärmer gespeist werden.

Vorteilhafterweise sind eine Hochdruckteilturbine und eine Mitteldruckteilturbine umfasst, die über die Überströmleitung mit Zwischenüberhitzer miteinander verbunden sind, wobei die Anzapfleitung der Hochdruckteilturbine, insbesondere über die Überströmleitung, angebunden ist. Hierbei wird der abgezogene Dampf nach der Hochdruck-Teilturbine in einem separaten Expansionsabschnitt bis auf das entsprechende Druckniveau eines angeschlossenen Verbrauchers expandiert. Der Prozessdampf wird vor der Entnahme nicht über einen Zwischenüberhitzer geleitet. Die nachfolgenden Anlagenteile sind entsprechend der verringerten Dampfmenge kostengünstiger ausgelegt.

In einer weiteren vorteilhaften Ausgestaltung sind eine Hochdruckteilturbine, eine erste Mitteldruckteilturbine, eine zweite Mitteldruckteilturbine sowie gegebenenfalls eine oder mehrere Niederdruckteilturbinen umfasst, wobei die erste Mitteldruckteilturbine und die zweite Mitteldruckteilturbine über die Überströmleitung mit einem zweiten Zwischenüberhitzer miteinander verbunden sind, und wobei die Anzapfleitung der ersten Mitteldruckteilturbine, insbesondere über die Überströmleitung, angebunden ist. Hierbei kann die beispielsweise für eine CO₂-Abscheidung benötigte Dampfmenge nach der ersten Mitteldruckteilturbine ausgekoppelt werden und insbesondere in einer Expansionsturbine bis auf das gewünschte Druckniveau expandiert werden.

Bevorzugt ist ein Dampfkessel umfasst, der abgasseitig über die Abgasleitung mit dem Verbraucher verbunden ist. Der Dampfkessel liefert Abgase aus der Verbrennung, die einer CO₂ -Abscheidung zugeführt werden. Durch die Verbindung zwischen der Dampfkessel und dem Verbraucher bietet sich die Möglichkeit, das Abgas vor der Emission in die Atmosphäre von CO₂ zu reinigen. Eine derartige Behandlung des Abgases bietet die Möglichkeit, ein Dampfkraftwerk besonders umweltschonend und energieeffizient auszubilden. In einer weiteren Ausgestaltung ist das Abgas einer Gasturbine zur Erhitzung von Dampf in einen Abhitzedampfkessel geführt und wird von dort in den Verbraucher geleitet.

Im Folgenden werden Ausführungsbeispiele der Erfindung anhand einer Zeichnung näher erläutert. Dabei zeigen
FIG 1 schematisch ein Dampfkraftwerk mit einer Anzahl von Teilturbinen und einer Anzapfleitung nach der Hochdruck (HD)-Expansionsstufe, wobei entnommener Dampf in einer separaten Expansionsturbine entspannt wird,
FIG 2 schematisch ein Dampfkraftwerk mit einer Anzahl von Teilturbinen und einer Anzapfleitung nach einer Hochdruck (HD)-Expansionsstufe, wobei entnommener Dampf in einer im Turbosatz integrierten Expansionsturbine entspannt wird,
FIG 3 schematisch ein Dampfkraftwerk mit einer Anzahl von Teilturbinen und einer Anzapfleitung nach einer ersten Mitteldruck (MD)-Expansionsstufe, wobei entnommener Dampf in einer separaten Expansionsturbine entspannt wird und
FIG 4 schematisch ein Dampfkraftwerk mit einer Anzahl von Teilturbinen und einer Anzapfleitung nach einer ersten Mitteldruck (MD)-Expansionsstufe, wobei entnommener Dampf in einer im Turbosatz integrierten, doppelflutigen Expansionsturbine entspannt wird.

Die gleichen Komponenten in den Figuren erhalten hierbei jeweils die gleichen Bezugszeichen.

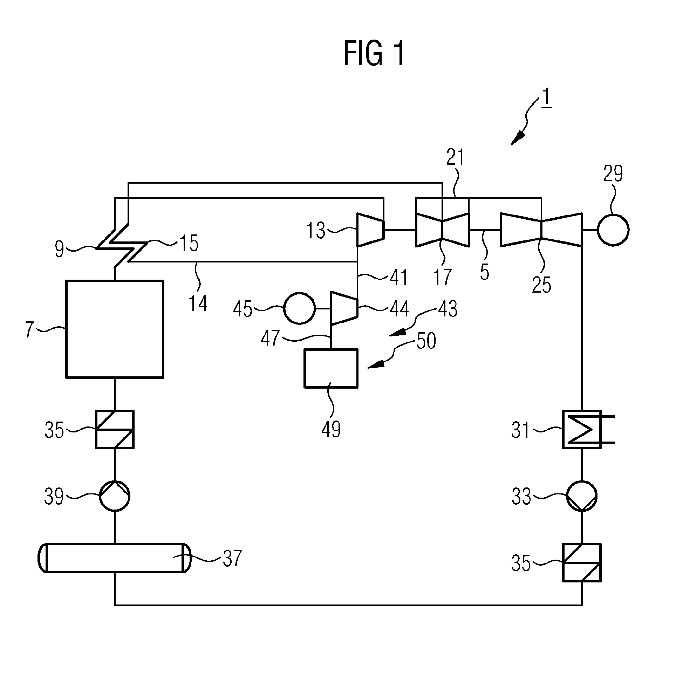

FIG 1 zeigt ein Dampfkraftwerk 1 mit einer Anzahl von Teilturbinen, die für unterschiedliche Drücke ausgelegt sind. Die Teilturbinen sind hintereinander einer gemeinsamen Welle 5 zugeordnet.

Zum Betrieb wird in einem Dampfkessel 7 Wasser erwärmt und über einen Frischdampfüberhitzer 9 Dampf erzeugt. Der überhitzte Dampf wird als Arbeitsdampf über eine Verrohrung in eine Hochdruckteilturbine 13 eingeleitet, wo der Dampf entspannt wird. Nach der Expansion in der Hochdruckteilturbine 13 wird ein Teil des Dampfes über eine erste Überströmleitung 14 in einen Zwischenüberhitzer 15 geleitet, dort erneut erhitzt und dann in eine doppelflutige Mitteldruckteilturbine 17 geleitet. Hier expandiert der Dampf bis zu einem vorgegebenen, nun niedrigeren Druckniveau erneut.

Im Anschluss wird der in der Mitteldruckteilturbine 17 auf das niedrigere Druckniveau entspannte Dampf über eine angeschlossene zweite Überströmleitung 21 in eine ebenfalls doppelflutige Niederdruckteilturbine 25 geleitet.

Über die gemeinsame Welle 5 wird ein Generator 29 zur Stromerzeugung angetrieben. Der die Niederdruckteilturbine 25 verlassende, entspannte und abgekühlte Dampf strömt in einen Kondensator 31, wo er durch Wärmeübertragung an die Umgebung kondensiert und sich als flüssiges Wasser sammelt. Über eine Kondensatpumpe 33 und einen Vorwärmer 35 wird das Wasser in einem Speisewasserbehälter 37 zwischengespeichert und dann über eine Speisewasserpumpe 39 erneut dem Dampfkessel 7 zugeführt.

Nach der Expansionsstufe ist der Hochdruckteilturbine 13 nach deren Expansionsstufe, und zwar strömungstechnisch vor dem Zwischenüberhitzer 15, eine Anzapfleitung 41 angeschlossen. Über diese Anzapfleitung 41 wird dem System nach der Expansion in der Hochdruckteilturbine 13 für einen Verbraucher 49 benötigter Dampf entnommen.

Die Anzapfleitung 41 mündet in eine Expansionsvorrichtung 43, die somit mit der Hochdruckteilturbine 13 verbunden ist. Die Expansionsvorrichtung 43 ist als eine separate Expansionsturbine 44 ausgestaltet, an die ein zweiter Generator 45 angeschlossen ist. Innerhalb der Expansionsturbine 44 wird der entnommene Dampf unter Leistung von Arbeit für das Gesamtsystem ideal auf ein für den Verbraucher 49 gewolltes Niveau (Druck, Temperatur) expandiert. Anstelle des Generators kann auch ein geeigneter Verbraucher für mechanische Energie angeordnet bzw. angeschlossen sein.

Von der Expansionsturbine 44 wird der entspannte Prozessdampf über eine Prozessdampfleitung 47 unmittelbar in Verbraucher 49 weitergeleitet. Dieser ist beispielsweise als eine Brennstoffaufbereitung oder als eine Rauchgasaufbereitung ausgestaltet. Die separate Expansionsturbine 44 wird im Gegendruckbetrieb eingesetzt. Das Expansionsende entspricht möglichst in diesem Fall direkt dem benötigten Prozessdampfdruck, so dass die Expansionsturbine 44 das benötigte Druck- und Temperaturniveau für den angeschlossenen Verbraucher 49 in idealer Weise liefert.

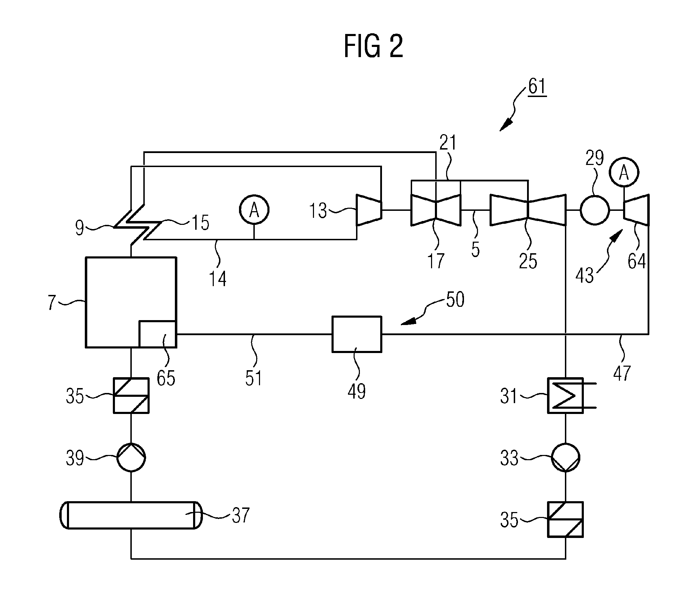

FIG 2 zeigt eine weitere Ausgestaltung eines Dampfkraftwerks 61 mit einer Anzahl von Teilturbinen.

Wie auch in FIG 1 wird der Turbosatz mittels überhitzten Dampfes aus dem Dampfkessel 7 betrieben. Der Dampf gelangt aus dem Dampfkessel 7 in den Frischdampfüberhitzer 9 und dann über eine Verrohrung in die Hochdruck-Teilturbine 13.

Im Unterschied zu FIG 1 ist die Expansionsvorrichtung 43 des Dampfkraftwerks nun aber nicht separat vom Turbosatz angeordnet, sondern als eine entsprechend ausgestaltete Expansionsturbine 64 der gemeinsamen Welle 5 zugeordnet. Über eine Anzapfung A aus der ersten Überströmleitung 14 wird der Expansionsturbine 64 abgezogener Dampf zugeführt und unter Leistung von Arbeit für das Gesamtsystem auf das vom ausgangsseitig über die Prozessdampfleitung 47 angeschlossenen Verbraucher 49 benötigte Niveau entspannt.

Der Verbraucher 49 ist hier als ein Rauchgaswäscher zur CO₂-Abscheidung aus den Abgasen der Befeuerung 65 des Dampfkessels 7 ausgestaltet. Entsprechend mündet eine Abgasleitung 51 aus der Befeuerung 65 in den Verbraucher 49. Das entstehende CO₂ wird, wie zuvor beschrieben, aus den Abgasen entfernt und gelagert.

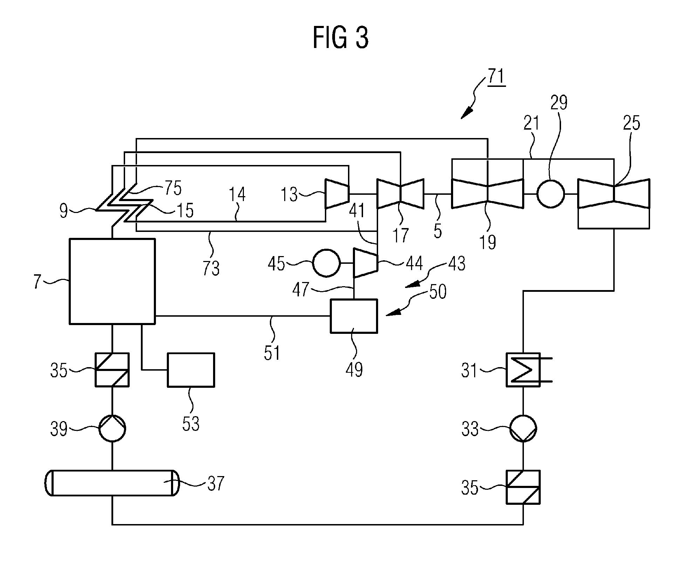

In FIG 3 ist eine dritte Ausgestaltung eines Dampfkraftwerks 71 zu sehen. Das Dampfkraftwerk 71 ist wie auch in den FIG 1 und 2 als ein Dampfkraftwerk mit einer Anzahl von Teilturbinen ausgebildet. Der Betrieb des Dampfkraftwerks 71 kann entsprechend den vorhergehenden Ausführungen entnommen werden. Wie in FIG 1 ist die Expansionsvorrichtung 43 im Dampfkraftwerk 71 als eine separate Expansionsturbine 44 ausgebildet. Im Unterschied zu FIG 1 ist die Expansionsturbine 44 jedoch über die Anzapfleitung 41 nach der Expansionsstufe der ersten Mitteldruckteilturbine 17 angeschlossen.

Der Arbeitsdampf wird nach der Expansion in der Hochdruckteilturbine 13 über eine erste Überströmleitung 14 und über den ersten Zwischenüberhitzer 15 in die erste MitteldruckTeilturbine 17 geleitet und dort expandiert. Über die dritte Überströmleitung 73 wird der expandierte Dampf nach der ersten Mitteldruckteilturbine 17 durch einen zweiten Zwischenüberhitzer 75 geleitet und von dort in eine zweite Mitteldruckteilturbine 19 geführt. Über die zweite Überströmleitung 21 wird der in der zweiten Mitteldruckteilturbine 19 entspannte Dampf in die doppelflutige Niederdruckteilturbine 25 geleitet. Von dort aus wird der Dampf analog zu den in FIG 1 und 2 beschriebenen Prozessen weiterbehandelt.

Gemäß FIG 3 ist vorgesehen, die Abgase einer Gasturbine 53 zur Dampferzeugung dem Kessel 7 zuzuleiten. Von dort strömen die Abgase über die Abgasleitung 51 in den Verbraucher 49, der vorliegend wiederum als ein Rauchgaswäscher ausgebildet ist.

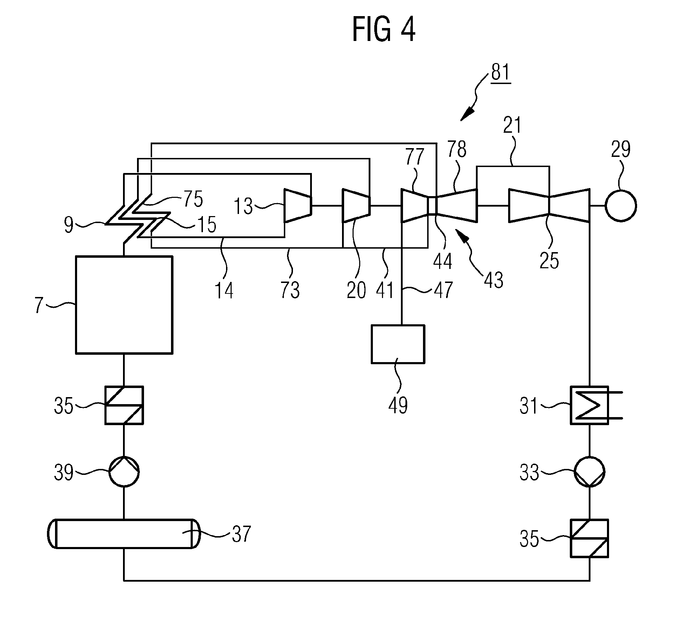

Das Dampfkraftwerk 81 gemäß FIG 4 umfasst eine einflutige Mitteldruckteilturbine 20, von der abströmender, entspannter Dampf über die dritte Überströmleitung 73 über den zweiten Zwischenüberhitzer 75 in eine in den Turbosatz integrierte Expansionsturbine 44 geführt ist.

Die der gemeinsamen Welle 5 zugeordnete Expansionsturbine 44 ist gemäß FIG 4 als eine asymmetrische Teilturbine ausgestaltet, die einen ersten Expansionsabschnitt 77 und einen zweiten Expansionsabschnitt 78 aufweist. Der zweite Expansionsabschnitt 78 ist als eine Mitteldruckturbine konzipiert. Nach der Expansion strömt der Dampf über die Überströmleitung 21 in die doppelflutige Niederdruckteilturbine 25. Der erste Expansionsabschnitt 77 ist eingangsseitig über die Anzapfleitung 41 mit der dritten Überströmleitung 73 verbunden. Aus dieser wird Dampf für den Verbraucher 49 abgezogen. Der erste Expansionsabschnitt 77 entspannt unter Leistung von Arbeit für das Gesamtsystem den abgezogenen Dampf für den Verbraucher 49 auf das benötigte Niveau. Der entspannte Dampf wird über die Prozessdampfleitung 47 dem Verbraucher 49 zugeführt.

Die asymmetrische Expansionsturbine 44 gemäß FIG 4 kann ebenso vom Turbosatz getrennt als separate Expansionsvorrichtung eingesetzt sein.

## Patentansprüche

1. Dampfkraftwerk (1, 61, 71, 81), umfassend eine Anzahl von Teilturbinen (13, 17, 19, 20, 25), die jeweils von Dampf durchströmbar sind, eine Überströmleitung (14, 21, 73), die zwischen einer ersten Teilturbine (13, 17, 19, 20, 25) und einer zweiten Teilturbine (13, 17, 19, 20, 25) angeordnet ist, und einen Zwischenüberhitzer (15, 75) in der Überströmleitung (14, 21, 73),
**dadurch gekennzeichnet, dass** der ersten Teilturbine (13, 17, 19, 20, 25) nach der Expansionsstufe strömungstechnisch vor dem Zwischenüberhitzer (15, 75) eine Anzapfleitung (41) zur Dampfentnahme angeschlossen ist, dass eine Expansionsvorrichtung (43) vorgesehen ist, in die die Anzapfleitung (41) mündet, und dass ein Verbraucher (49) über eine Prozessdampfleitung (47) der Expansionsvorrichtung (43) angeschlossen ist.

2. Dampfkraftwerk (1, 61, 71, 81) nach Anspruch 1,
**dadurch gekennzeichnet, dass** der Verbraucher (49) als ein Rauchgaswäscher, insbesondere als ein CO₂-Abscheider, ausgebildet ist.

3. Dampfkraftwerk (1, 61, 71, 81) nach Anspruch 1,
**dadurch gekennzeichnet, dass** der Verbraucher (49) zu einer Brennstoffaufbereitung ausgebildet ist.

4. Dampfkraftwerk (1, 61, 71, 81) nach einem der vorhergehenden Ansprüche,
**dadurch gekennzeichnet, dass** die Expansionsvorrichtung (43) ausgelegt ist, die im Wesentlichen gesamte benötigte Dampfmenge des Verbrauchers (49) zu liefern.

5. Dampfkraftwerk (1, 61, 71, 81) nach einem der vorhergehenden Ansprüche,
**dadurch gekennzeichnet, dass** die Expansionsvorrichtung (43) als eine Expansionsturbine (44, 64) ausgebildet ist.

6. Dampfkraftwerk (1, 61, 71, 81) nach Anspruch 5,
**dadurch gekennzeichnet, dass** die Expansionsturbine (44, 64) mit den Teilturbinen (13, 17, 19, 20, 25) auf einer gemeinsamen Welle (5) angeordnet ist.

7. Dampfkraftwerk (1, 61, 71, 81) nach Anspruch 5 oder 6,
**dadurch gekennzeichnet, dass** die Expansionsturbine (44, 64) doppelflutig mit zwei asymmetrischen Expansionsabschnitten (77, 78) ausgelegt ist, wobei in einen Expansionsabschnitt (77) die Anzapfleitung (41) und in den anderen Expansionsabschnitt (78) eine über einen Zwischenüberhitzer (75) geführte Überströmleitung aus einer Teilturbine (20) mündet.

8. Dampfkraftwerk (1, 61, 71, 81) nach einem der Ansprüche 5 bis 7,
**dadurch gekennzeichnet, dass** die Expansionsturbine (44, 64) weitere Anzapfstellen für Prozessdampf umfasst.

9. Dampfkraftwerk (1, 61, 71, 81) nach einem der vorhergehenden Ansprüche,
**dadurch gekennzeichnet, dass** eine Hochdruckteilturbine (13) und eine Mitteldruckteilturbine (17, 19) umfasst sind, die über die Überströmleitung (14, 21, 73) mit Zwischenüberhitzer (15, 75) miteinander verbunden sind, wobei die Anzapfleitung (41) der Hochdruckteilturbine (13), insbesondere über die Überströmleitung (14, 21, 73), angebunden ist.

10. Dampfkraftwerk (1, 61, 71, 81) nach einem der vorhergehenden Ansprüche,
**dadurch gekennzeichnet, dass** eine Hochdruckteilturbine (13), eine erste Mitteldruckteilturbine (17), eine zweite Mitteldruckteilturbine (19) sowie gegebenenfalls eine Niederdruckteilturbine (25, 27) umfasst sind, wobei die erste Mitteldruckteilturbine (17) und die zweite Mitteldruckteilturbine (19) über die Überströmleitung (14, 21, 73) mit Zwischenüberhitzer (15, 75) miteinander verbunden sind und wobei die Anzapfleitung (41) der ersten Mitteldruckteilturbine (17), insbesondere über die Überströmleitung (14, 21, 73), angebunden ist.

11. Dampfkraftwerk (1, 61, 71, 81) nach einem der vorhergehenden Ansprüche,
**dadurch gekennzeichnet, dass** ein Dampfkessel (65) umfasst ist, der abgasseitig über eine Abgasleitung (51) mit dem Verbraucher (49) verbunden ist.

12. Dampfkraftwerk (1, 61, 71, 81) nach Anspruch 11,
**dadurch gekennzeichnet, dass** eine Gasturbine (53) umfasst ist, die abgasseitig mit dem Dampfkessel (65) verbunden ist.
